Europäisches Patentamt

European Patent Office

Office européen des brevets

(11) Publication number: **0 433 828 A2**

(12) **EUROPEAN PATENT APPLICATION**

(21) Application number: **90123678.6**

(22) Date of filing: **10.12.90**

(51) Int. Cl.⁵: **B07C 5/36, B07C 5/34**

(30) Priority: **15.12.89 IT 2271189**

(43) Date of publication of application:
**26.06.91 Bulletin 91/26**

(84) Designated Contracting States:
**DE DK ES FR GB**

(71) Applicant: **ALCATEL FACE STANDARD S.p.A.**
**Viale L. Bodio 33/39**
**I-20158 Milano(IT)**

(72) Inventor: **Scata, Mario**
**Via Fonte Baiano 74**
**Teramo(IT)**

(74) Representative: **Weinmiller, Jürgen et al**
**Lennéstrasse 9 Postfach 24**
**W-8133 Feldafing(DE)**

(54) **Device for identifying and sorting objects.**

(57) The device for identifying and sorting objects as described comprises a sliding surface whereon the parcels to be sorted,each provided with an identification bar code , are laid down, dragging means capable to carry the parcels from a positioning area to a sorting area upon crossing a readout station where the codes are identified , and a plurality of trap doors realized in said sliding surface wherein the identified parcels are dropped . The dragging means consist essentially of a pair of pulleys whereon a flexible transmission member is operatively engaged and bears a plurality of drag members designed to shift along the sliding surface extending according to a closed loop-line in order to carry the parcels to the sorting area .

FIG. 1

## "DEVICE FOR IDENTIFYING AND SORTING OBJECTS."

The present invention relates to a device for identifying and sorting objects comprising : a sliding surface whereon the objects to be sorted, each provided with a bar code applied on at least one side thereof,are laid down; dragging means running on said sliding surface to carry the objects from a positioning area on the surface itself to a sorting area;means for identifying said objects through bar code reading out and a plurality of trap doors provided on the sliding surface in a pre-established position.

More specifically the subject invention can be used particularly at premises of companies provided with installations for packaging articles consisting of equal or different objects or parcels provided with a bar code for a selection before the final distribution.

As known, at present , devices of the mentioned type consist of belt conveyors having a rectilinear sliding surface whereon parcels are run and, after a classification by readout means, are routed,thrusted by dragging means, toward openable base walls or trap doors which, upon command, allow to discharge the parcels into containers, bags or on further conveyor belts.

The known dragging means consist of openings having a substantially quadrangular shape realized on the conveyor belt in such a way that a diagonal of the opening is aligned with the feed direction of the belt itself. The parcel to be sorted and coming from a feed chute is dropped into one of said openings where, because of the feed motion of the conveyor belt, assumes a pre-established position defined by both the opening sides opposite to the feed direction of the belt. Practically, the parcels abut and run on the sliding surface dragged by the conveyor belt.

It must be noted that devices of the type mentioned above are provided with a rectilinear sliding surface for the parcels. Consequently the sorting installations cannot have large extensions unless they are coupled one another according to an in - line arrangement .

This in-line arrangement of several devices in the area of junction or interface between a device and the next one has some drawbacks . In fact , between a conveyor belt and the next one is an idle gap originated by cylindrical shape of the head rollers of the conveyor belts , which may cause the misalignment or even the upset of the carried parcel making impossible the bar code identification by the readout means .

Moreover, it has to be noted that the composition of several sorting lines by means of in-line coupled belts leads inevitably to problems of synchronization related to both the feed motion of the system and the opening of the various trap doors at the right time .

Finally, it must be noted that the conveyor belts layout as hereinbefore described do not allow the use of the belt sections on the way back since they flow beneath the working plane.

Therefore, the main object of the present invention is to overcome the mentioned drawbacks related to known devices for identifying and sorting objects by realizing a device able to exploit to the utmost the dragging means and the length of the sliding surface.

Another object of the present invention is to provide a device for identifying and sorting objects designed to facilitate the synchronism among its various operative members .

These objects and other yet which will become more apparent from the following description are achieved according to the present invention by a device for identifying and sorting objects characterized in that said sliding surface extends substantially according to a closed loop-line and that said dragging means comprise a pair of pulleys engaging a flexible transmission member to which a plurality of drag members, running along the extension of said sliding surface, are fixed .

Other features and advantages of the present invention will appear better from the following detailed description of a preferred embodiment given as an indicative and therefore not limitative example, where :

- figure 1 is a top view of the subject device during operation ;
- figure 2 is a perspective view of a drag member fixed to the flexible transmission member.

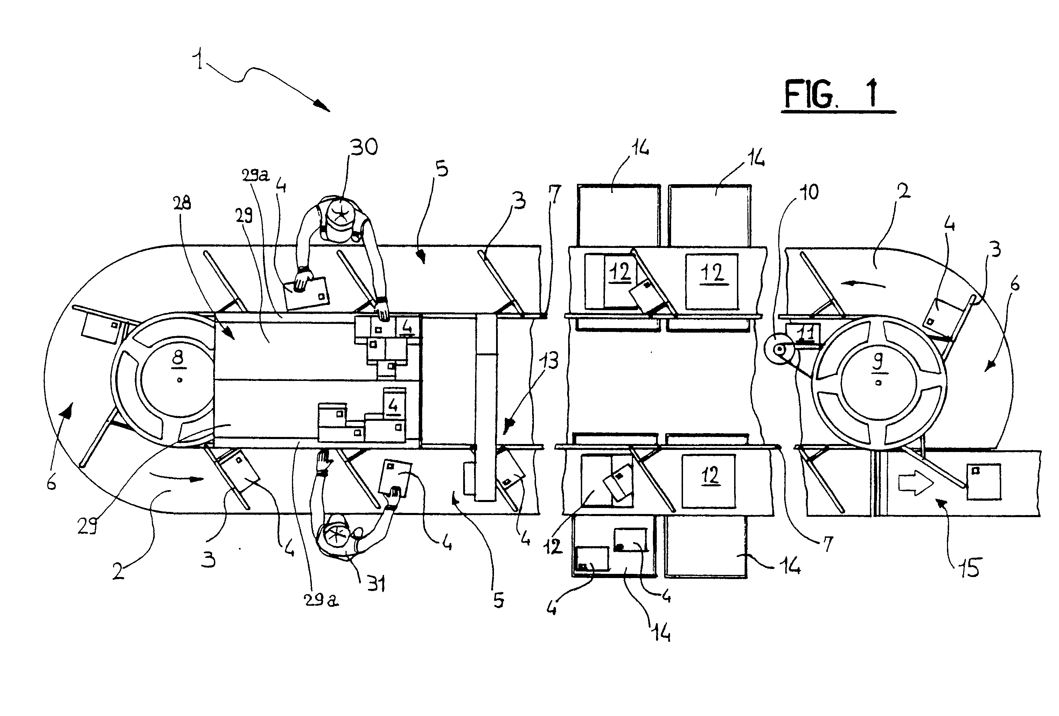

With reference to said figure and in particular to figure 1, reference numeral 1 indicates as a whole a device for indentifying and sorting objects according to the present invention .

The device 1 comprises a sliding surface made of material with low coefficient of friction , which extends substantially according to a closed loopline. More particularly the sliding surface 2 consists of two straight-lined and parallel sections 5 linked by two semicircular sections 6 .

On the sliding surface 2 are a plurality of drag members 3 running along the sliding surface and dragging, during the motion, a number of parcels 4 to be identified and sorted.

Still according to the present invention the feed of drag members 3 is carried out by a rope 7 whereto the drag members 3, spaced one another by a pre-established distance, are fixed.

As illustrated in figure 1, the rope 7 in engaged to a first (transmission) pulley 8 and to a second (driving) pulley 9 operated by a motor controlled by an electronic regulator 11.

A readout and identification station 13 of bar code applied on parcel 4, known per se and of conventional type, is located along the feed path of parcels 4.

Still referring to figure 1, downstream the readout and identification station 13 is a plurality of trap doors 12 openable upon command from respective members located inside the station 13 itself , once the various parcels 4 in transit have been identified .

The opening of trap doors 12 allows the discharge of the identified parcel 4 into underlying containers or bags 14 capable to contain a pre-established amount of objects with the same destination. In alternative the discharge of the identified parcel 4 may occur on further conveyor belts fit for routing parcel 4 towards other collecting areas .

Still according to the present invention and with reference to figure 1, a conveyor belt 15 flush and linked to sliding surface 2 is arranged downstream a rectilinear section 5 of sliding surface 2 . The belt 15 , stationary in normal conditions , moves the parcels 4, which have not been identified in the readout station 13 , away from the sorting area .

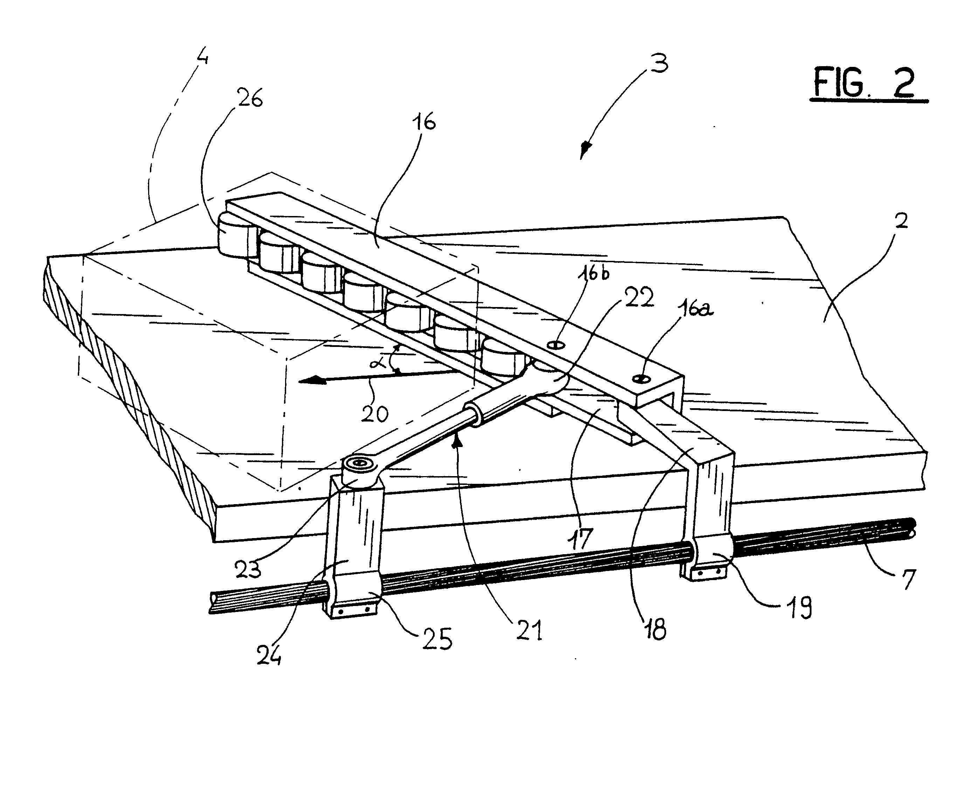

Reference numeral 28 indicates a deposit area located between the rectilinear sections 5 of sliding surface 2 which consists of respective chutes 29 whereon parcels 4 to be sorted are laid down . The chutes 29 are provided , at the side oriented toward the rectilinear section 5 , of ledges 29a for retaining parcels 4 . At discharge station 28 are the working places of two operators 30 and 31,which manually pick up the parcels 4 and arrange them on sliding surface 2. Referring in particular to figure 2 , reference numeral 3 indicates , as a whole , a drag member running on the sliding surface 2 .

The drag member 3 is actuated by and is rigidly fixed to a rope 17 , extending along the inner perimeter of , and just minimally below , the sliding surface 2 . The drag member 3 comprises substantially an arm 16 having a "c" section with the bent portion 17 oriented toward the feed direction 20 of the drag member itself . The arm 16 is linked to rope 7 by means of a bracket 18 having a clamp-shaped end 19 for the fastening to rope 7 and the opposite end perforated for pivoting to arm 16 at 16 a . The fastening of arm 16 to rope 7 is compleded by an adjustable length , link rod 21 , having a first end 22 pivoted at 16b to arm 16 and the opposite end 23 rotatably mounted at one first end of a crank 24 whose second end 25 is clamp-shaped for mounting on rope 7 .

Still referring to figure 2 it has to be noted that the arm 16 makes an angle $\propto$ of variable value with the feed direction 20 of drag member 3 , since the length of the articulated rod 21 may be adjusted . Indicatively the angle $\propto$ values which allow a favourable alignment of parcel 4 are comprised between 40 and 80 degrees .

Finally arm 16 is provided with a plurality of small rollers 26, arranged in recess 17 , and rotating around vertical axes paralleled up at a pre-established distance .

The presence of small rollers 26 facilitates the sliding of parcel 4 , thrusted by drag member 3 , reducing considerably the friction otherwise generated between the parcel 4 and the arm 16 .

After what has been described in structural terms , the operation of the device according to the present invention is the following .

In operation motor 10 continuously drives the driving pulley 9 and rope 7 engaged by pulleys 8 and 9 . Rope 7 causes drag members 3 to run on the sliding surface thus starting the conveyance and sorting cycle of parcels 4 .

To this end operators 30 and 31 take the parcels from the deposit area 28 and lay them down on sliding surface 2 . As drag members 3 advance, arms 16 grip the parcels 4 and arrange them with two of their consecutive sides respectively in abutment with the small rollers 26 and parallel to the link rod 21 . In this way the parcels 4 are correctly orientated so that , during the progress, when parcel 4 goes into readout station 13 , the associated bar code is read and identified . After this identification , the readout station 13 emits a signal for opening a pre-established trap door in which the identified parcel 4 is discharged and collected in the underlying container 14 . In the event the parcels 4 are not identified by station 13 , because of lack of reading the bar code or upon a command according to which the parcel 4 is not to be sorted , the trap doors 12 remain closed and the parcel 4 is run on the sliding surface 2 until it reaches the conveyor belt 15 where it is picked off and routed to other collecting areas .

The present invention thus achieves the proposed objects. In fact the subject device 1 permits to exploit to the utmost the sliding surface 2 still assuring a good synchronism among the various members operating in the various areas of the device itself .

Naturally several modifications and changes may be made to the device for identifying and sorting objects according to the present invention without forasmuch going beyond the inventive concept which characterizes it .

**Claims**

1. A device for identifying and sorting objects including :

- a sliding surface whereon the objects to be sorted , each provided with a bar code applied on at least one side thereof , are laid down :
- dragging means running on said sliding surface for conveying the objects from a positioning area on the surface itself to a sorting area :
- means for identifying said objects through bar code reading out : and
- a plurality of trap doors located in a pre-established position on the sliding surface , characterized in that said sliding surface extends substantially according to a closed loop-line and that said dragging means comprise a pair of pulleys engaging a flexible transmission member to which a plurality of drag members , running along the extention of said sliding surface , are fixed .

2. A device according to claim 1 , characterized in that said sliding surface extending according to a closed loop-line has two parallel rectilinear sections linked by two semicircular sections inside which said pair of pulleys are arranged .

3. A device according to claim 1 , characterized in that each of said drag members comprises an arm having one end connected to the flexible transmission member and extending away from this last in a direction which makes an acute angle of prefixed value with its apex oriented opposite to the direction of movement of said drag member .

4. A device according to claim 3 , characterized in that a plurality of small upright rollers are pivotally mounted on said arm and located on the portion of the arm oriented toward the direction of movement of the drag member .

5. A device according to claim 2 , characterized in that , aligned and flush with said sliding surface , downstream a rectilinear section thereof, is associated a conveyor belt for removing unidentified objects from the sliding surface itself.

6. A device according to claim 2 , characterized in that it comprises , between the rectilinear sections of the sliding surface , at least a deposit station for the objects to be sorted consisting of two planes each inclined toward a respective rectilinear section of the sliding surface and having a ledge which retains the objects to be sorted .

7. A device according to the preceding claims and as hereinbefore described and illustrated for the proposed objects.

FIG. 1

EP 0 433 828 A2

FIG. 2

EP 0 433 828 A2